# EUROPEAN PATENT APPLICATION

(11) **EP 4 586 054 A1**
(43) Date of publication of application: **16.07.2025**
(21) Application number: 24217349.0
(22) Date of filing: 04.12.2024
(51) Int. Cl.: G06F 3/01, G06Q 30/0601, G06V 20/20

(54) **MANAGEMENT SYSTEM, SERVER, METHOD, AND PROGRAM**

(30) Priority: 10.01.2024 JP 2024001717
(71) Applicant: SHIMADZU CORPORATION, Kyoto-shi, Kyoto 604-8511 (JP)
(72) Inventor: KAWAI, Jun, Kyoto-shi, Kyoto, 604-8511 (JP); SUGIE, Tomoya, Kyoto-shi, Kyoto, 604-8511 (JP); TAKEGAWA, Ryo, Kyoto-shi, Kyoto, 604-8511 (JP)
(74) Representative: Müller-Boré & Partner Patentanwälte PartG mbB

(57) **Abstract**

A management system (1000) that provides a virtual space to a user (Url) includes a user apparatus (200) used by the user (Ur1), a sensor (11) configured to observe change over time of a target (Tr1) present in a real space, and a server (100) configured to transmit information for providing the virtual space to the user apparatus (200). The server (100) is configured to obtain a detection result by the sensor (S101), calculate a degree of change of the target based on the detection result (S104), and arrange in the virtual space, an object (Ob1) representing the target on which the degree of change is reflected (S105).

## Description

### CROSS REFERENCE TO RELATED APPLICATIONS

This nonprovisional application is based on Japanese Patent Application No. 2024-001717 filed with the Japan Patent Office on January 10, 2024, the entire contents of which are hereby incorporated by reference.

### BACKGROUND OF THE INVENTION

### Field of the Invention

The present disclosure relates to a system, a server, a method, and a program that provide a virtual space to a user.

### Description of the Background Art

A system that provides a virtual space to a user has conventionally been known. For example, Japanese Patent Laying-Open No. 2001-118081 (Patent Literature 1) discloses a system that matches weather in a virtual space with weather in a real space based on information obtained from a server that manages information on the weather in the real space. More specifically, the system in Patent Literature 1 selects the weather in the virtual space from "fine", "cloudy", and "rainy" based on the information on the weather in the real space.

### SUMMARY OF THE INVENTION

The user can be immersed in the virtual space by expression in the virtual space, of a current state of an observation target in the real space as in the system in Patent Literature 1. If change over time of the observation target present in the real space can be expressed in the virtual space, the user can further be immersed in the virtual space.

The present disclosure was made to achieve the object described above, and an object thereof is to provide a technology that can further immerse a user in a virtual space.

A management system in the present disclosure is a management system that provides a virtual space to a user. The management system includes a user apparatus used by the user, a sensor configured to observe change over time of a target present in a real space, and a server configured to transmit information for providing the virtual space to the user apparatus. The server is configured to obtain a detection result by the sensor, calculate a degree of change of the target based on the detection result, and arrange in the virtual space, an object representing the target on which the degree of change is reflected.

A server in the present disclosure is a server that provides a virtual space to a user. The server includes a processor and a memory storing instructions that, when executed, cause the processor to perform operations. The processor is configured to obtain a detection result by a sensor configured to observe change over time of a target present in a real space, calculate a degree of change of the target based on the detection result, and arrange in the virtual space, an object representing the target on which the degree of change is reflected.

A method in the present disclosure is a method of providing a virtual space to a user. The method includes as processing to be performed by a computer, obtaining a detection result by a sensor configured to observe change over time of a target present in a real space, calculating a degree of change of the target based on the detection result, and arranging in the virtual space, an object representing the target on which the degree of change is reflected.

A program in the present disclosure is a program to be executed by a server that provides a virtual space to a user. The program includes as processing to be performed by a computer, obtaining a detection result by a sensor configured to observe change over time of a target present in a real space, calculating a degree of change of the target based on the detection result, and arranging in the virtual space, an object representing the target on which the degree of change is reflected.

The foregoing and other objects, features, aspects and advantages of this invention will become more apparent from the following detailed description of this invention when taken in conjunction with the accompanying drawings.

### BRIEF DESCRIPTION OF THE DRAWINGS

Fig. 1 is a diagram showing a schematic configuration of a management system according to a first embodiment.
Fig. 2 is a block diagram of components included in the management system.
Fig. 3 is a diagram for illustrating an example in which a degree of change of a real space is reflected on a virtual space in the first embodiment.
Fig. 4 is a flowchart for illustrating processing for reflecting the real space in the first embodiment.
Fig. 5 is a flowchart for illustrating NFT issuance processing in the first embodiment.
Fig. 6 is a diagram for illustrating an object indicating issuance of an NFT.
Fig. 7 is a flowchart for illustrating processing for purchasing a product in the first embodiment.
Fig. 8 is a diagram for illustrating an example in which the degree of change of the real space is reflected on the virtual space in a modification.
Fig. 9 is a diagram showing a schematic configuration of a management system according to a second embodiment.
Fig. 10 is a diagram for illustrating an example in which the degree of change of the real space is reflected on the virtual space in the second embodiment.

### DESCRIPTION OF THE PREFERRED EMBODIMENTS

### [First Embodiment]

The present embodiment will be described in detail with reference to the drawings. The same or corresponding elements in the drawings have the same reference characters allotted and description thereof will not be repeated in principle.

### <Configuration of Management System>

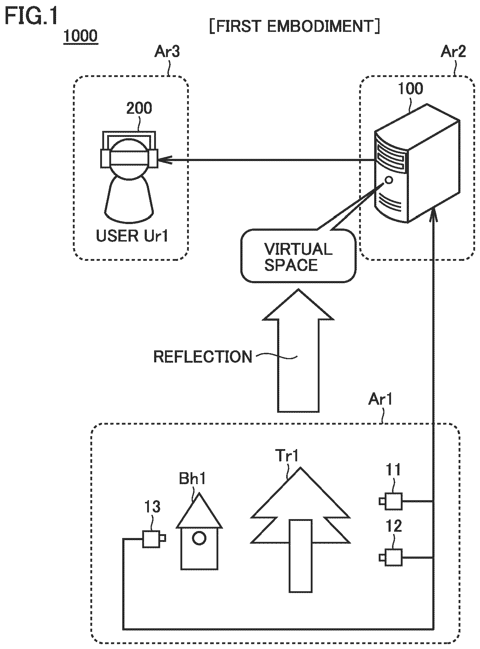

Fig. 1 is a diagram showing a schematic configuration of a management system 1000 according to a first embodiment. Management system 1000 is a system that manages a virtual space. Management system 1000 includes a server 100, a sensor 11, cameras 12 and 13, and a user apparatus 200. Sensor 11 and cameras 12 and 13 are arranged at a position Ar1 in a real space. Server 100 is arranged at a position Ar2 in the real space. User apparatus 200 is arranged at a position Ar3 in the real space.

Positions Ar1 to Ar3 are the real space in a real world, rather than the virtual space. Position Ar1 is a specific forest. The forest is maintained by a specific company, as a part of corporate social responsibility (CSR) activities. Position Ar2 is a server room owned by the company which maintains the forest at position Ar1. Position Ar3 is a house of a user Ur1 immersed in the virtual space. Positions Ar1 to Ar3 are spaces different from one another.

The company described above participates in a campaign to maintain the forest to preserve the forest in an appropriate condition and to improve global environments. As shown in Fig. 1, a tree Tr1 is planted at position Ar1. In the first embodiment, tree Tr1 is a tree having a height exceeding 10 m, such as quercus acutissima carruth or white oak. In one aspect, tree Tr1 may be a plant low in height, such as asarum caulescens maxim, eupatorium j aponicum, burnet bloodwort, or chrysanthemum boreale, or another type of plant. Tree Tr1 is one of a plurality of trees present at position Ar1. Tree Tr1 is different in degree of growth depending on an ambient environment. A bird house Bh1 is placed around tree Tr1 and placed, for example, on a branch of tree Tr1.

Sensor 11 and camera 12 detect information on tree Tr1. Camera 13 detects information on bird house Bh1. Server 100 generates and updates the virtual space that expresses the forest at position Ar1, based on the information obtained by sensor 11 and cameras 12 and 13. Expression by the virtual space may specifically be expression of a status of growth of the tree planted at position Ar1 in the virtual space or expression of sound produced at position Ar1 by collection of sound (for example, chattering of birds, sound of movement of leaves by wind, and sound of flow of a river) produced at position Ar1 and output of the sound in the virtual space. The user can thus enjoy artificial forest bathing, and the user who does not actually visit position Ar1 can be given a healing effect. Expression by the virtual space is not limited to expression for allowing the user to enjoy forest bathing, and may be, for example, expression of an ecosystem of animals and plants at position Ar1, expression of a content of chemicals in soil, water quality of rivers, and the like, or expression of the number of visitors to position Ar1. A degree of contribution to maintenance at position Ar1 by the company can thus be shown to the user with various methods.

User Ur1 may be, for example, a stockholder of the company which maintains the forest, a purchaser of a product marketed by the company, an employee of the company, a business partner which collaborates with the company, or the like. User Ur1 can feel as if the user visited the forest at position Ar1 by being immersed in the virtual space through user apparatus 200. User Ur1 can thus feel efforts in the CSR activities made by the company, without actual visit to the forest at position Ar1.

Sensor 11 is implemented, for example, by light detection and ranging (LiDAR), and it images an overall shape and a size of tree Tr1 as three-dimensional data. Camera 12 images an appearance of tree Tr1. Image data showing the appearance of tree Tr1 includes information indicating a color of leaves of tree Tr1 and information indicating the overall shape and the size of tree Tr1. Camera 13 images the inside of bird house Bh1. Image data showing the inside of bird house Bh1 includes information on whether or not an animal is visiting bird house Bh1. Each of sensor 11 and cameras 12 and 13 keeps detecting a state of a target over time. In other words, tree Tr1 is a target of observation by sensor 11 and camera 12. Bird house Bh1 is a target of observation by camera 13.

User apparatus 200 shows the virtual space managed by server 100 to user Ur1. Server 100 transmits to user apparatus 200, information for showing the virtual space to user Ur1. User apparatus 200 is, for example, a head-mounted display (HMD). In the first embodiment, user Ur1 is immersed in the virtual space with user apparatus 200 being attached to his/her head.

Server 100 generates and updates an object in the virtual space based on the data obtained by sensor 11 and cameras 12 and 13. Sensor 11 may correspond the "first sensor" in the present disclosure. Camera 12 may correspond to the "second sensor" in the present disclosure. Camera 13 may correspond to the "third sensor" in the present disclosure. Tree Tr1 may correspond to the "first target" in the present disclosure. The overall shape of tree Tr1 may correspond to the "first portion" in the present disclosure. Leaves of tree Tr1 may correspond to the "second portion" in the present disclosure. Bird house Bh1 may correspond to the "second target" in the present disclosure. Sensor 11 and cameras 12 and 13 may collectively be referred to as "each sensor" below.

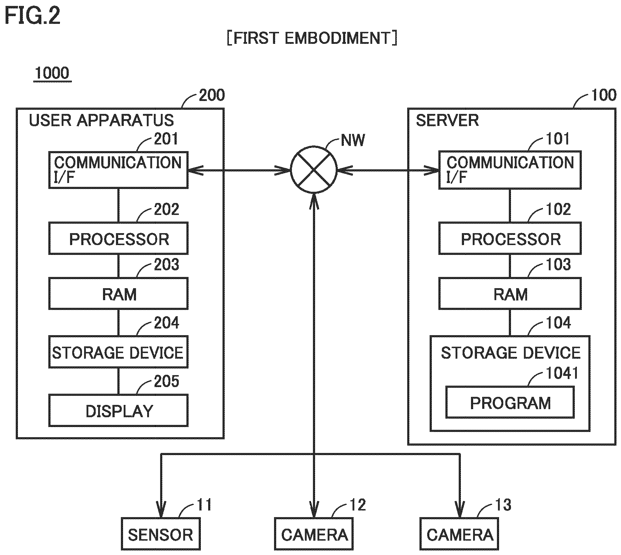

Fig. 2 is a block diagram of components included in management system 1000. Server 100, user apparatus 200, sensor 11, and cameras 12 and 13 are connected to one another over a network NW. Network NW is, for example, the Internet. Server 100 includes a communication interface (I/F) 101, a processor 102, a random access memory (RAM) 103, and a storage device 104. Communication interface 101, processor 102, RAM 103, and storage device 104 are connected to a common bus and configured to transmit and receive a signal to one another.

Processor 102 is a computing entity (computer) that performs various types of processing by executing various programs. Processor 102 includes, for example, a central processing unit (CPU), a micro-processing unit (MPU), or the like. Though processor 102 performs functions to perform various types of processing by executing a program, some or all of these functions may be performed by a field programmable gate array (FPGA), an application specific integrated circuit (ASIC), or the like. The term "processor" is not limited to a processor in a narrow sense that performs processing in accordance with a stored program architecture like the CPU or the MPU, but may encompass hard-wired circuitry such as the ASIC or the FPGA.

Therefore, processor 102 can also be read as processing circuitry, processing by which is defined in advance by a computer readable code and/or hard-wired circuitry. Processor 102 may be implemented by a single chip or a plurality of chips. Furthermore, processor 102 and relating processing circuitry may be implemented by a plurality of computers connected to one another through wires or wirelessly over a local area network or a wireless network. Processor 102 and the relating processing circuitry may be implemented by a cloud computer that performs remote computation based on input data and outputs a result of computation to another device located at a remote position.

RAM 103 is a transitory storage medium used for storage of a result of computation or the like by CPU 102. Storage device 104 is a memory such as a read only memory (ROM) and a non-transitory storage medium such as a hard disc drive (HDD) or a solid state drive (SSD). Storage device 104 is used as a buffer in processing by CPU 102 and used for storage of a program 1041 to be executed by CPU 102, a detection value from sensor 11, and/or image data from cameras 12 and 13. Storage device 104 may be used for storage of a result of computation or the like by CPU 102, similarly to RAM 103.

In the first embodiment, user apparatus 100 includes a communication interface (I/F) 201, a processor 202, a random access memory (RAM) 203, a storage device 204, and a display 205. Communication interface 201, processor 202, RAM 203, and storage device 204 in user apparatus 200 correspond to communication interface 101, processor 102, RAM 103, and storage device 104 in server 100, respectively, and are similar in configuration. Therefore, description will not be repeated.

User apparatus 200 is a head-mounted display attached to the head of user Ur1 to cover eyes of user Ur1 and show the virtual space. Though Fig. 2 shows an example in which processor 202, RAM 203, and storage device 204 are contained in user apparatus 200, in one aspect, processor 202, RAM 203, and storage device 204 may be provided separately from user apparatus 200. For example, processor 202, RAM 203, and storage device 204 are provided as a general-purpose PC.

Sensor 11 and cameras 12 and 13 transmit results of detection to server 100 through a not-shown general-purpose computer arranged at position Ar1.

### <Reflection of Real Space>

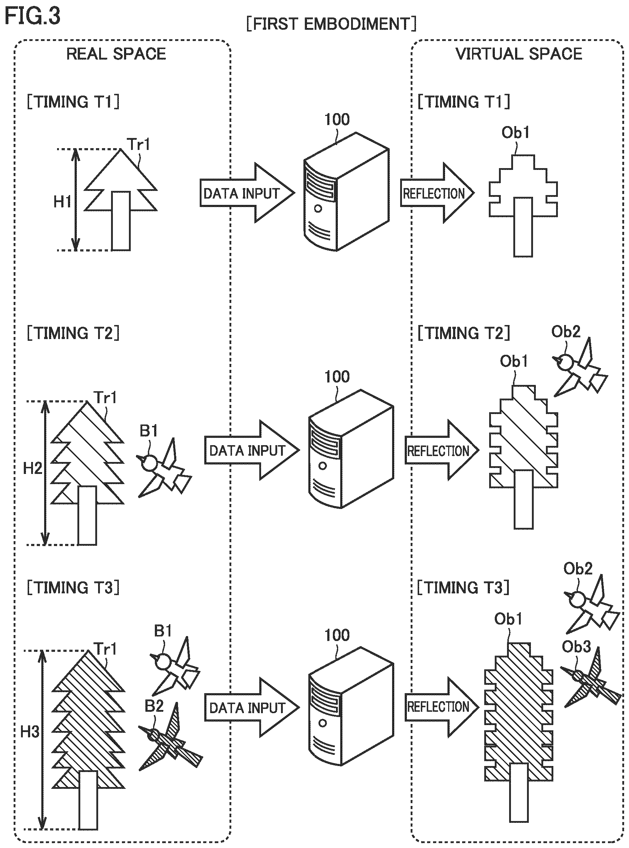

Fig. 3 is a diagram for illustrating an example in which a degree of change of the real space is reflected on the virtual space in the first embodiment. A portion surrounded by a dashed line on the left in Fig. 3 shows a component arranged at position Ar1. A portion surrounded by a dashed line on the right in Fig. 3 shows an object arranged in the virtual space. Fig. 3 shows states of the real space and the virtual space at each of timing T1, timing T2, and timing T3. Timing T1 among timing T1, timing T2, and timing T3 is oldest and timing T3 is latest.

In the example in Fig. 3, at timing T1 oldest among timings T1 to T3, tree Tr1 is in a state of seedling and in a state immediately after planting in the forest at position Ar1. At timing T1, tree Tr1 has a height H1. Sensor 11 obtains a shape of tree Tr1 having height H1 as three-dimensional data and transmits the three-dimensional data to server 100.

Server 100 specifies that tree Tr1 has height H1 based on the three-dimensional data. Server 100 generates an object Ob1 in the virtual space based on the obtained three-dimensional data. In the first embodiment, object Ob1 is a three-dimensional model that simulates the shape of tree Tr1, and placed in the virtual space. User Ur1 can thus feel presence of tree Tr1 through object Ob1 similar in shape and size to tree Tr1, by being immersed in the virtual space.

Similarly, at timing T1, camera 12 transmits image data including color information of leaves of tree Tr1 to server 100. Server 100 specifies the color information of the leaves of tree Tr1 from the image data obtained from camera 12. Server 100 generates the color information of the leaves of object Ob1 in the virtual space based on the specified color information of the leaves of tree Tr1.

At timing T1, camera 13 transmits image data showing the state in bird house Bh1 to server 100. When an animal is present in bird house Bh1, server 100 generates a new object corresponding to the animal based on information indicating the state in bird house Bh1 obtained from camera 13. Since no animal visits bird house Bh1 at timing T1 in the example in Fig. 3, an object corresponding to the animal is not generated.

Processing in server 100 at timing T2 will now be described. Timing T2 is timing after lapse of a prescribed period since timing T1. Timing T2 may be, for example, timing after lapse of one second, one minute, one hour, one day, one week, or the like since timing T1.

Tree Tr1 in the real space has grown as compared with the tree at timing T1 and has a height H2. Height H2 is higher than height H1. With change in temperature around tree Tr1 and a duration of sunshine, the color of the leaves of tree Tr1 changes. In the first embodiment, the color of the leaves of tree Tr1 at timing T2 is denser than the color of the leaves of tree Tr1 at timing T1. Furthermore, a wild bird B1 visits bird house Bh1.

As shown in Fig. 3, also at timing T2, similarly to timing T1, sensor 11 obtains the shape of tree Tr1 as the three-dimensional data and transmits the three-dimensional data to server 100. At timing T2, tree Tr1 has height H2. Server 100 updates the shape of object Ob1 in the virtual space based on the obtained three-dimensional data.

At this time, server 100 determines the shape and the size of object Ob1 at timing T2 to show a degree of growth of tree Tr1, with the shape of object Ob1 at timing T1 being defined as the reference. Specifically, as shown in Fig. 3, the height of object Ob1 at timing T2 is higher than the height of object Ob1 at timing T1.

Management system 1000 in the first embodiment thus reflects the size of tree Tr1 in the real space at any time. User Ur1 who felt object Ob1 at timing T1 can more specifically grasp the growth of tree Tr1 by feeling again object Ob1 at timing T2.

In the first embodiment, object Ob1 is generated and updated in conformity with the shape shown by the three-dimensional data. Therefore, the degree of change of object Ob1 from timing T1 to timing T2 is similar to the degree of change of tree Tr1 from timing T1 to timing T2. In one aspect, however, the degree of actual change of tree Tr1 and the degree of change of object Ob1 do not have to be identical. For example, server 100 may exaggerate the degree of change of object Ob1 in order to express the degree of growth of tree Tr1 in a manner easy-to-understand to user Ur1.

At timing T2, camera 12 transmits the image data including the color information of the leaves of tree Tr1 to server 100. Server 100 specifies the color information of the leaves of tree Tr1 from the obtained image data. At timing T2, server 100 updates the color information of the leaves of object Ob1 in the virtual space based on the specified color information of the leaves of tree Tr1.

At this time, server 100 determines the color information of the leaves of object Ob1 at timing T2 to show the degree of change of the color of the leaves of tree Tr1, with the color information of the leaves of object Ob1 at timing T1 being defined as the reference. Management system 1000 in the first embodiment can thus express the degree of change of the color of the leaves of tree Tr1 in the real space in a manner easy-to-understand. Similarly to the example of the shape, the degree of change of the color of object Ob1 may be exaggerated as compared with the actual degree of change of the color of the leaves.

At timing T2, camera 13 transmits the image data showing the state in bird house Bh1 to server 100. At timing T2, wild bird B1 visits bird house Bh1. Server 100 specifies visit of wild bird B1 to bird house Bh1 based on the image data received from camera 13. Server 100 newly generates an object Ob2 corresponding to visiting wild bird B1.

Some wild birds build nest on tree Tr1 having a height equal to or higher than a prescribed height. In other words, visit by a wild bird relates to the height of tree Tr1. User Ur1 can feel the growth of tree Tr1 by checking whether or not a wild bird visits bird house Bh1 and can feel the growth of the entire forest from the growth of tree Tr1.

At timing T3, tree Tr1 in the real space has further grown as compared with tree Tr1 at timing T2 and has a height H3. Height H3 is higher than height H2. The color of the leaves of tree Tr1 is further denser than that at timing T2. Furthermore, at timing T3, a wild bird B2 in addition to wild bird B1 visits bird house Bh1.

Then, as shown in Fig. 3, also at timing T3, similarly to timings T1 and T2, sensor 11 transmits the three-dimensional data showing the shape of tree Tr1 to server 100. At timing T3, tree Tr1 has height H3. Server 100 updates the shape of object Ob1 in the virtual space based on the three-dimensional data. At this time, server 100 determines the shape and the size of object Ob1 at timing T3 to show the degree of growth of tree Tr1, with the shape of object Ob1 at timing T2 being defined as the reference.

At timing T3, camera 12 transmits the image data including the color information of the leaves of tree Tr1 to server 100. Server 100 updates the color information of the leaves of object Ob1 in the virtual space based on the obtained color information of the leaves of tree Tr1. At this time, server 100 determines the color information of the leaves of object Ob1 at timing T3 to show the degree of change of the color of the leaves of tree Tr1, with the color information of the leaves of object Ob1 at timing T2 being defined as the reference.

At timing T3, camera 13 transmits the image data showing the state of the inside of bird house Bh1 to server 100. At timing T3, wild bird B2 in addition to wild bird B1 visits bird house Bh1. Server 100 newly generates an object Ob3 corresponding to wild bird B2. Wild bird B2 is a bird different in type from wild bird B1. Server 100 generates an object different for each type of the wild bird. Therefore, object Ob2 and object Ob3 which simulate birds are different from each other in shape, size, and color.

Thus, management system 1000 in the first embodiment successively detects the state of the target (tree Tr1 and bird house Bh1) arranged at position Ar1 in the real space and updates the object in the virtual space based on the detection result. User Ur1 can thus feel the growth of tree Tr1 based on change of the object at each timing of visit to the virtual space. In other words, in the first embodiment, by feeling change of object Ob1, user Ur1 can more strongly feel the sense of visit to position Ar1 reflected in the virtual space. Management system 1000 in the embodiment can thus immerse the user who is immersed in the virtual space further in the virtual space.

In the first embodiment, even though user Ur1 has never actually visited position Ar1, user Ur1 can feel the growth of tree Tr1 present at position Ar1 through change of object Ob 1. In the first embodiment, user Ur1 can thus feel affinity or attachment to position Ar1 by feeling change of object Ob1 even in the space the user has never actually visited. Since the user can feel attachment to position Ar1, the user can more readily feel attachment also to the company which maintains the forest at position Ar1, and corporate image can be improved.

### <Processing in Flowchart for Reflecting Real Space>

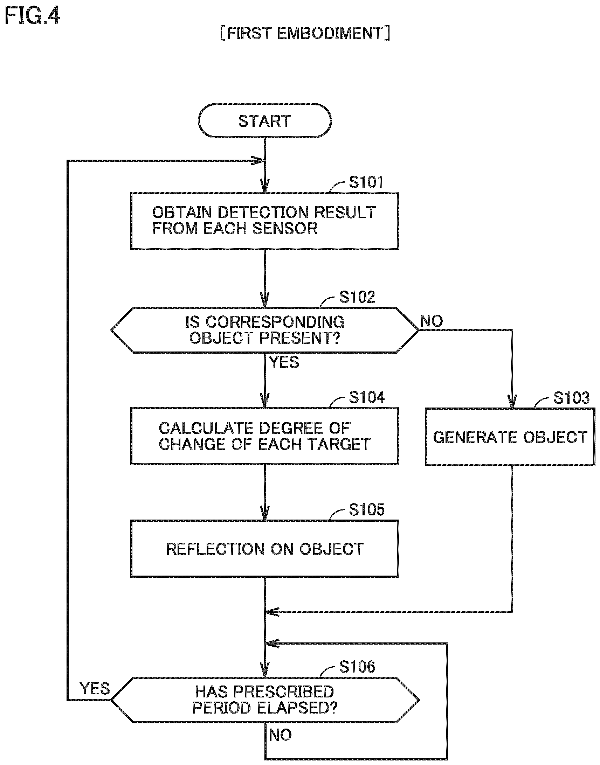

Fig. 4 is a flowchart for illustrating processing for reflecting the real space in the first embodiment. Processing in the flowchart shown in Fig. 4 is stored as a program in storage device 104 of server 100. The processing in the flowchart shown in Fig. 4 is performed by execution of program 1041 in storage device 104 by processor 102.

Server 100 obtains the detection result from each sensor (step S101). Each sensor in step S101 means sensor 11 and cameras 12 and 13. Whether or not the object corresponding to the detection result by each sensor is present is determined (step S102). In the example in Fig. 3, server 100 determines whether or not object Ob1 corresponding to tree Tr1, object Ob2 corresponding to wild bird B1, or Ob3 is already present in the virtual space.

When the corresponding object is not present (NO in step S102), server 100 generates the corresponding object (step S103). For example, server 100 generates object Ob1 corresponding to tree Tr1, object Ob2 corresponding to wild bird B1, or object Ob3 corresponding to wild bird B2.

When the corresponding object is already present (YES in step S102), on the other hand, server 100 calculates the degree of change of each target (step S104). More specifically, server 100 calculates the degree of change by comparing the result of previous detection obtained from each sensor with the result of present detection. For example, at timing T2, server 100 obtains a length calculated by subtracting height H1 from height H2 as the degree of growth, based on the three-dimensional data. At timing T2, server 100 obtains the degree of change in density of the color of the leaves of tree Tr1 from the image data.

Server 100 has the calculated degree of change reflected on the object (step S105). Specifically, server 100 updates the shape of present object Ob1 in accordance with the degree of growth representing growth from height H1 to height H2, with information on the previous shape of object Ob i being defined as the reference. Server 100 updates the information on the present color of the leaves of object Ob1 in accordance with the degree of change in color of the leaves, with the information on the previous color of the leaves of object Ob1 being defined as the reference.

After step S103 or S105 is performed, server 100 determines whether or not a prescribed period has elapsed (step S106). The prescribed period may be a period such as one second, one minute, one hour, one day, or one week. When the prescribed period has not elapsed (NO in step S106), server 100 repeats processing in step S106. When the prescribed period has elapsed (YES in step S106), server 100 has the process return to step S101. Thus, in the first embodiment, information on the object is updated over time with the detection result by each sensor. The processing in step S106 does not have to be described in program 1041, and program 1041 itself may be executed every prescribed period.

### <Issuance of Non-Fungible Token>

Issuance of a non-fungible token (NFT) will now be described. The non-fungible token may simply be referred to as an "NFT" below. Server 100 manages data on object Ob1 or the like in the virtual space based on a blockchain technology. In the first embodiment, the data managed based on the blockchain technology is the non-fungible token (NFT) given to the user. More specifically, proof of issuance of the NFT is given to the user who purchased data on object Ob1.

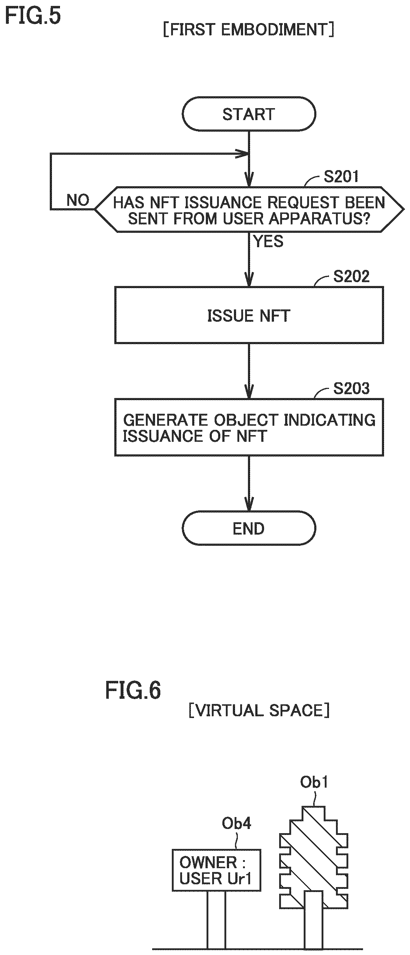

Fig. 5 is a flowchart for illustrating NFT issuance processing in the first embodiment. Processing in the flowchart shown in Fig. 5 is stored as program 1041 in storage device 104 of server 100. The processing in the flowchart shown in Fig. 5 is performed by execution of the program in storage device 104 by processor 102.

Server 100 determines whether or not an NFT issuance request has been sent from user apparatus 200 (step S201). When the NFT issuance request has not been sent from user apparatus 200 (NO in step S201), server 100 repeats processing in step S201.

When the NFT issuance request has been sent from user apparatus 200 (YES in step S201), server 100 issues the NFT that proves that the data on object Ob1 is a property of the user (step S202). Thereafter, server 100 generates an object indicating issuance of the NFT in the virtual space (step S203).

Fig. 6 is a diagram for illustrating an object Ob4 indicating issuance of the NFT. Fig. 6 shows object Ob1 in the virtual space, and object Ob4 is newly generated in the vicinity of object Ob1 in the virtual space. Object Ob4 is an object in a shape of a notice board, and characters "owner: user Ur1" is written thereon. In the first embodiment, other users who visit the virtual space can thus be informed that object Ob1 is the property of user Ur1.

The NFT issuance request in step S201 may be sent, for example, based on donation by the user to growth of tree Tr1 in the real space corresponding to object Ob1. User Ur1 can thus show to other users in the virtual space, contribution to tree planting activities in the real space and improvement in global environments. The shape of object Ob4 is not limited to the shape of the notice board, but a name of user Ur1 may be shown on a stone monument, a hologram, or object Ob1 itself. Alternatively, an object of a badge, a crown, or the like may be shown on user Ur1 himself/herself. Object Ob4 may correspond to the "proof object" in the present disclosure.

### <Processing for Purchasing Product Made from Tree>

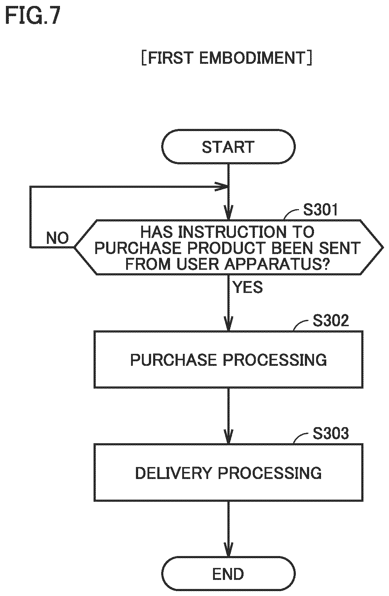

Fig. 7 is a flowchart for illustrating processing for purchasing a product in the first embodiment. Processing in the flowchart shown in Fig. 7 is stored as a program in storage device 104 of server 100. The processing in the flowchart shown in Fig. 7 is performed by execution of program 1041 in storage device 104 by processor 102.

As described above, in the first embodiment, the virtual space managed by server 100 expresses the forest maintained by the company. In forest maintenance works, thinning is performed. Thinning refers to works for cutting some of trees with growth of a forest to adjust a density of too dense a forest. As a result of thinning, light reaches the ground surface, development of vegetation underneath is promoted, and a function of the forest improves. If the forest is left dense without thinning being performed, trees may interfere with growth of one another to stunt their growth.

The company cuts tree Tr1 for thinning and manufactures a product from cut trees Tr1. The product made from thinned trees Tr1 may be, for example, furniture, dishes, paper, or aromatic oil prepared from essential oil distilled from trunks, branches, and leaves of trees Tr1.

Server 100 determines whether or not a request to purchase the product made from thinned tree Tr1 has been sent from user apparatus 200 (step S301). When the request to purchase the product made from thinned tree Tr1 has not been sent from user apparatus 200 (NO in step S301), server 100 repeats processing in step S301.

When the request to purchase the product made from thinned tree Tr1 has been sent from user apparatus 200 (YES in step S301), server 100 performs purchase processing for purchasing the product made from thinned tree Tr1 (step S302). The purchase processing for purchasing the product refers to processing for obtaining approval by server 100 of payment for the product from the user with a credit card, virtual currency, or the like. Thereafter, server 100 performs product delivery processing (step S303). The delivery processing refers to processing for server 100 to ask a department in charge in the company to deliver the product.

Thus, in the first embodiment, the product manufactured from the tree present at position Ar1 can be delivered to user Ur1. For example, when user Ur1 purchases aromatic oil, user Ur1 can enjoy scent of the aromatic oil with the user of an atomizer. Furthermore, in the first embodiment, the user is immersed in the virtual space while smelling the scent of the aromatic oil, so that the forest in the virtual space is expressed through the olfactory sense and feeling of immersion in the virtual space can be enhanced.

### <Modification>

In the first embodiment, the configuration in which the shape of object Ob1 simulating tree Tr1 present in the real space changes in accordance with the degree of change of tree Tr1 is described. Object Ob1, however, should only grow in size, scale, and number, and is not limited to a three-dimensional model in the shape simulating tree Tr1. "Growth" in the present embodiment is not limited to increase in size, scale, or number but may mean decrease. For example, turning to weathering of rocks and stones, a size of a rock present in the real space gradually becomes smaller with weathering. The present embodiment is applicable also to a target decreasing in size, scale, or number with the lapse of time. In a modification, a configuration in which an object of a character that expresses the degree of growth of tree Tr1 is generated will be described.

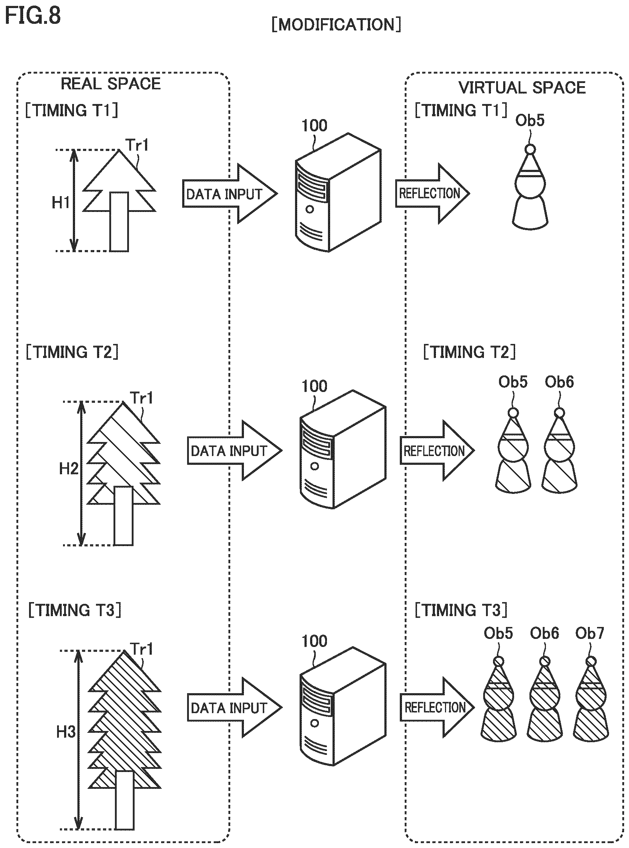

Fig. 8 is a diagram for illustrating an example in which the degree of change of the real space is reflected on the virtual space in the modification. Description of components in Fig. 8 the same as in management system 1000 in Fig. 1 will not be repeated.

Tree Tr1 in the real space shown in Fig. 8 grows at the degree of growth as in Fig. 3. In the modification, server 100 expresses the degree of change of tree Tr1 with the number of objects of the character. At timing T1, server 100 places an object Ob5 of the character in the virtual space, in correspondence with tree Tr1 having height H1. Object Ob5 is, for example, an object representing a fairy of the tree.

Furthermore, at timing T2, server 100 newly places an object Ob6 in the virtual space in addition to object Ob5 of the character, in correspondence with tree Tr1 having height H2. User Ur1 can thus grasp growth of tree Tr1 based on increase in number of objects of the fairy of the tree that expresses tree Tr1.

At timing T3, server 100 newly places an object Ob7 in the virtual space in addition to objects Ob5 and Ob6 of the character, in correspondence with tree Tr1 having height H3. User Ur1 can thus grasp further growth of tree Tr1 based on increase in number of objects that express tree Tr1.

As shown in Fig. 8, server 100 brings the color of the leaves of tree Tr1 in correspondence, for example, with the color of clothing of the character. User Ur1 can thus grasp change in color of the leaves of tree Tr1.

Other modifications in the first embodiment will be described below. The example where the three-dimensional data showing the shape of tree Tr1 is generated with the use of LiDAR is described above. A technique to generate the three-dimensional data showing the shape of tree Tr1, however, is not limited to the technique with the use of LiDAR and the three-dimensional data may be generated, for example, based on a stereo vision method or photogrammetry.

In the first embodiment, the example in which user apparatus 200 is implemented by the head-mounted display is described. User apparatus 200, however, may simply be a liquid crystal panel or an organic electro luminescence (EL) panel.

In the first embodiment, the height of tree Tr1 is detected over time and the degree of change of the detected height is calculated as the degree of growth of tree Tr1. What is detected, however, may be the degree of growth of tree Tr1 in a lateral direction, the number of leaves, a degree of density of the leaves, or the like, rather than the height of tree Tr1. Though the example in which the color of the leaves is detected is described in the first embodiment, the color of flowers, fruits, branches, or the like may be detected.

Though a wild bird in bird house Bh1 is detected in the example in the first embodiment, an animal detected in bird house Bh1 is not limited to the wild bird but may be an animal such as a flying squirrel, a squirrel, or a snake. What is imaged by camera 13 for detection of an animal is not limited to bird house Bh1, but may be an area above or below tree Tr1, and an animal generated as an object may be an insect such as a butterfly.

In the example in the first embodiment, camera 13 that images the inside of bird house Bh1 is implemented by a sensor configured to observe over time a target different from tree Tr1 and relevant to growth of tree Tr1. The sensor configured to observe over time the target different from tree Tr1, however, is not limited to camera 13, but may be, for example, a CO₂ sensor that detects a concentration of carbon dioxide in an atmosphere around tree Tr1 . As photosynthesis is activated as a result of growth of the forest, the concentration of carbon dioxide in the surroundings lowers. Server 100 may express lowering in concentration of carbon dioxide in the virtual space. For example, with lowering in concentration of carbon dioxide, server 100 increases transparency of an object representing air in the virtual space. Alternatively, with lowering in concentration of carbon dioxide, server 100 may increase the number of star objects arranged during the night and increase the number of visually recognizable stars.

In the first embodiment, the example in which server 100 and each sensor and tree Tr1 are arranged at different positions is described. Server 100 and each sensor and tree Tr1, however, may be arranged at the same position. Specifically, position Ar1 and position Ar2 may be the same.

In the modification described above, the example in which the number of fairies of the tree increases with growth of tree Tr1 is described. Server 100, however, may change the age, the appearance, or the size of the fairy of the tree with growth of tree Tr1.

### [Second Embodiment]

In the first embodiment, the technique to express the growth of tree Tr1 in the virtual space, with tree Tr1 present at position Ar1 being defined as the target, is described. The target present in the real space, however, is not limited to the tree, and anything that changes over time may be applicable. In a second embodiment, a configuration in which the number of stocks of products stored by a company is expressed in the virtual space will be described.

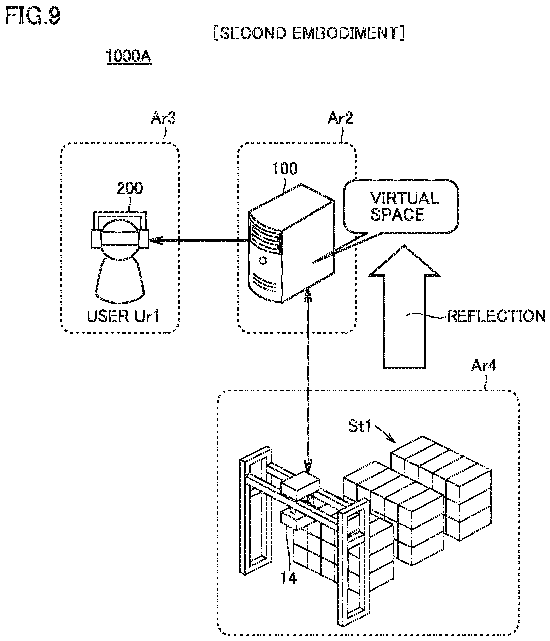

Fig. 9 is a diagram showing a schematic configuration of a management system 1000A according to the second embodiment. Description of components in Fig. 9 the same as in management system 1000 in Fig. 1 will not be repeated. Management system 1000A includes server 100 and a sensor 14. Sensor 14 is arranged at a position Ar4 in the real space. Position Ar4 is a warehouse where stocks of products of a company are stored.

The products of the company stored at position Ar4 are products relating to improvement in water quality of rivers. The products of the company in the second embodiment are, for example, apparatuses that detect contamination of soil around rivers. Trade of the products of the company leads to reduction in contamination of soil around rivers and finally to improvement in water quality of the rivers.

As shown in Fig. 9, sensor 14 and stocks St1 of products are arranged at position Ar4. An example in Fig. 9 includes forty-five products as stocks St1 of the products. Sensor 14 is a sensor that detects the number of products and it is, for example, a three-dimensional measurement unit, a camera, or a detector that reads a radio frequency identification (RFID) tag.

Server 100 in the second embodiment generates and updates an object in the virtual space based on data obtained by sensor 14. In the second embodiment, the number of stocks of the products may correspond to the "first target." In the second embodiment, sensor 14 may correspond to the "first sensor."

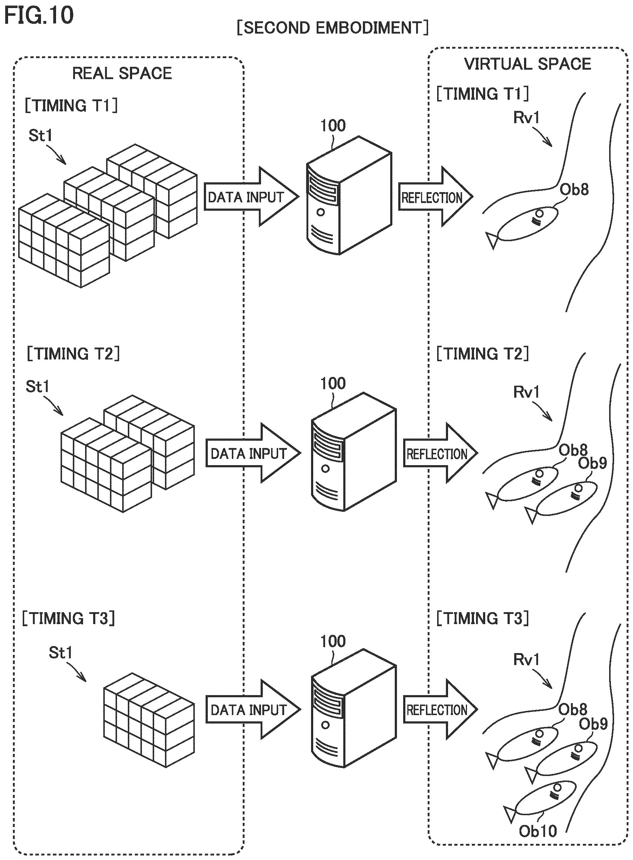

Fig. 10 is a diagram for illustrating an example in which the degree of change of the real space is reflected on the virtual space in the second embodiment. In the second embodiment, server 100 expresses sales of the products of the company with the number of fish in a river Rv1 arranged in the virtual space.

At timing T1, server 100 arranges an object Ob8 in river Rv1 in correspondence with forty-five stocks. Object Ob8 is, for example, an object representing fish.

As the products are traded, the number of stocks at timing T2 is thirty. At timing T2, server 100 adds an object Ob9 to river Rv1 in correspondence with thirty stocks. User Ur1 can thus grasp decrease in number of stocks as a result of trade of the products of the company based on increase in number of fish objects arranged in river Rv1.

Furthermore, as a result of trade of the products, at timing T3, the number of stocks is fifteen. At timing T3, server 100 adds an object Ob10 to river Rv1 in correspondence with fifteen stocks. User Ur1 can thus grasp further decrease in number of stocks as a result of trade of the products of the company, based on further increase in number of fish objects arranged in river Rv1.

Thus, management system 1000A in the second embodiment can intuitively express the sales of the products of the company and improvement in river in the real space with the number of fish objects in the virtual space. In the second embodiment as well, a situation in the real space can be expressed in a manner more easy-to-understand to the user immersed in the virtual space. In the second embodiment as well, a technology that can further immerse the user in the virtual space is provided.

### [Aspects]

Illustrative embodiments described above are understood by a person skilled in the art as specific examples of aspects below.

(Clause 1) A management system according to one aspect is a management system that provides a virtual space to a user, and includes a user apparatus used by the user, a sensor configured to observe change over time of a target present in a real space, and a server configured to transmit information for providing the virtual space to the user apparatus. The server is configured to obtain a detection result by the sensor, calculate a degree of change of the target based on the detection result, and arrange in the virtual space, an object representing the target on which the degree of change is reflected.

According to the management system described in Clause 1, a technology that can further immerse the user in the virtual space is provided.

(Clause 2) In the management system described in Clause 1, the target grows with lapse of time and the degree of change includes a degree of growth of the target.

According to the management system described in Clause 2, the degree of growth of the target can be reflected on the object.

(Clause 3) In the management system described in Clause 2, the target is different in degree of growth depending on an environment.

According to the management system described in Clause 3, the degree of growth depending on the environment in the real space can be reflected on the object.

(Clause 4) In the management system described in any one of Clauses 1 to 3, the target includes a plant.

According to the management system described in Clause 4, the degree of change of the plant can be reflected on the object.

(Clause 5) In the management system described in Clause 4, the object includes an object that simulates the plant.

According to the management system described in Clause 5, the plant in the real space can be expressed in the virtual space.

(Clause 6) In the management system described in Clause 4 or 5, the sensor includes a first sensor configured to observe a first portion of the target and a second sensor configured to observe a second portion of the target.

According to the management system described in Clause 6, the degree of change of a plurality of portions included in the target can be reflected on the object.

(Clause 7) In the management system described in Clause 6, the first portion is an overall shape of the plant and the second portion is a leaf of the plant.

According to the management system described in Clause 7, the overall shape of the plant and the degree of change of the leaf of the plant can be reflected on the obj ect.

(Clause 8) In the management system described in Clause 4 or 5, the target includes a first target and a second target. The sensor includes a first sensor configured to observe the first target and a third sensor configured to observe the second target.

According to the management system described in Clause 8, the second target in addition to the first target can be expressed in the virtual space.

(Clause 9) In the management system described in Clause 8, the second target is a bird house placed around the plant.

According to the management system described in Clause 9, biology of an animal relevant to the first target which is the plant can be reflected in the virtual space.

(Clause 10) In the management system described in any one of Clauses 1 to 9, the server is configured to generate a non-fungible token for proving that the object is a property of the user, in accordance with an instruction from the user apparatus.

According to the management system described in Clause 10, as a result of issuance of the NFT, the object in the virtual space can be owned by the user.

(Clause 11) In the management system described in Clause 10, the server is configured to arrange in the virtual space, a proof object for proving that the object is the property of the user.

According to the management system described in Clause 11, all users immersed in the virtual space can recognize the owner of the object.

(Clause 12) In the management system described in any one of Clauses 1 to 11, the server is configured to perform purchase processing for purchasing a product manufactured by using the target, in accordance with an instruction from the user apparatus.

According to the management system described in Clause 12, the user can purchase the product relevant to the target from which reflection on the object is derived.

(Clause 13) In the management system described in Clause 1, the target includes the number of stocks of the product.

According to the management system described in Clause 13, the user can recognize the number of stocks as the object, in a manner easy-to-understand.

(Clause 14) A server according to one aspect is a server that provides a virtual space to a user. The server includes a processor and a memory storing instructions that, when executed, cause the processor to perform operations. The processor is configured to obtain a detection result by a sensor configured to observe change over time of a target present in a real space, calculate a degree of change of the target based on the detection result, and arrange in the virtual space, an object representing the target on which the degree of change is reflected.

According to the server described in Clause 14, a technology that can further immerse the user in the virtual space is provided.

(Clause 15) A method according to one aspect is a method of providing a virtual space to a user. The method includes, as processing to be performed by a computer, obtaining a detection result by a sensor configured to observe change over time of a target present in a real space, calculating a degree of change of the target based on the detection result, and arranging in the virtual space, an object representing the target on which the degree of change is reflected.

According to the method described in Clause 15, a technology that can further immerse the user in the virtual space is provided.

(Clause 16) A program according to one aspect is a program to be executed by a server that provides a virtual space to a user. The program includes, as processing to be performed by a computer, obtaining a detection result by a sensor configured to observe change over time of a target present in a real space, calculating a degree of change of the target based on the detection result, and arranging in the virtual space, an object representing the target on which the degree of change is reflected.

According to the program described in Clause 16, a technology that can further immerse the user in the virtual space is provided.

Though embodiments of the present invention have been described, it should be understood that the embodiments disclosed herein are illustrative and non-restrictive in every respect. The scope of the present invention is defined by the terms of the claims and is intended to include any modifications within the scope and meaning equivalent to the terms of the claims.

## Claims

1. A management system (1000) that provides a virtual space to a user (Ur1), the management system comprising:
a user apparatus (200) used by the user;
a sensor (11) configured to observe change over time of a target (Tr1) present in a real space; and
a server configured to transmit information for providing the virtual space to the user apparatus, wherein
the server (100) is configured to
obtain a detection result by the sensor (S101),
calculate a degree of change of the target based on the detection result (S104), and
arrange in the virtual space, an object (Ob1) representing the target on which the degree of change is reflected (S105).

2. The management system according to claim 1, wherein
the target grows with lapse of time, and
the degree of change includes a degree of growth of the target.

3. The management system according to claim 2, wherein
the target is different in degree of growth depending on an environment.

4. The management system according to claim 1, wherein
the target includes a plant.

5. The management system according to claim 4, wherein
the object includes an object that simulates the plant.

6. The management system according to claim 4, wherein
the sensor includes a first sensor (11) configured to observe a first portion of the target and a second sensor (12) configured to observe a second portion of the target.

7. The management system according to claim 6, wherein
the first portion is an overall shape of the plant, and
the second portion is a leaf of the plant.

8. The management system according to claim 4, wherein
the target includes a first target and a second target, and
the sensor includes a first sensor configured to observe the first target and a third sensor (13) configured to observe the second target.

9. The management system according to claim 8, wherein
the second target is a bird house placed around the plant.

10. The management system according to claim 1, wherein
the server is configured to generate a non-fungible token for proving that the object is a property of the user, in accordance with an instruction from the user apparatus.

11. The management system according to claim 10, wherein
the server is configured to arrange in the virtual space, a proof object (Ob4) for proving that the object is the property of the user.

12. The management system according to claim 1, wherein
the server is configured to perform purchase processing (S302) for purchasing a product manufactured by using the target, in accordance with an instruction from the user apparatus.

13. A server (100) that provides a virtual space to a user, the server comprising:
a processor (102); and
a memory (103) storing instructions that, when executed, cause the processor to perform operations, wherein
the processor is configured to
obtain a detection result by a sensor configured to observe change over time of a target present in a real space (S101),
calculate a degree of change of the target based on the detection result (S104), and
arrange in the virtual space, an object representing the target on which the degree of change is reflected (S105).

14. A method of providing a virtual space to a user, the method comprising, as processing to be performed by a computer:
obtaining a detection result by a sensor configured to observe change over time of a target present in a real space (S101);
calculating a degree of change of the target based on the detection result (S 104); and
arranging in the virtual space, an object representing the target on which the degree of change is reflected (S105).

15. A program (1041) to be executed by a server that provides a virtual space to a user, the program comprising, as processing to be performed by a computer:
obtaining a detection result by a sensor configured to observe change over time of a target present in a real space (S101);
calculating a degree of change of the target based on the detection result (S104); and
arranging in the virtual space, an object representing the target on which the degree of change is reflected (S105).
